# EUROPEAN PATENT APPLICATION

(11) **EP 3 236 644 A1**
(43) Date of publication of application: **25.10.2017**
(21) Application number: 15869260.8
(22) Date of filing: 10.12.2015
(51) Int. Cl.: H04M 3/00

(54) **SERVICE PROCESSING METHOD AND DEVICE, AND HOME GATEWAY**

(30) Priority: 17.12.2014 CN 201410789743
(71) Applicant: ZTE Corporation, Shenzhen, Guangdong 518057 (CN)
(72) Inventor: WANG, Xiaoyan, Shenzhen Guangdong 518057 (CN); ZHU, Wenhua, Shenzhen Guangdong 518057 (CN); LI, Jianing, Shenzhen Guangdong 518057 (CN); ZHUANG, Shuxian, Shenzhen Guangdong 518057 (CN); CAO, Tingting, Shenzhen Guangdong 518057 (CN)
(74) Representative: Novagraaf Technologies
(86) International application number: PCT/CN2015/097042
(87) International publication number: WO 2016/095752

(57) **Abstract**

A service processing method and device, and a home gateway are provided. A dialing message sent by a terminal is received. It is judged whether the dialing message is a message for processing a predetermined service. When a judgment result is that the dialing message is the message for processing the predetermined service, the predetermined service is processed. By means of the technical solution, the problems in the related communication technology that the manner of activating or deactivating services is complicated and flexibility is low are solved, thereby achieving the effects of reducing the complexity of the manner of activating or deactivating services and improving flexibility.

## Description

### Technical Field

The present disclosure relates to the communication field, in particular to a service processing method and device, and a home gateway.

### Background

With the development of science and technology, there are more and more services that are available for users and capable of providing convenient services for users. There are also a variety of manners of activating these services. An elaboration is given below by taking a hotline service for example.

The hotline service is a service provided for users to realize a basic voice call conveniently and fast. There may be many methods for realizing the hotline service, for example, the following methods may be adopted: checking or unchecking a corresponding switch through a web page; activating or deactivating the service through a network management node; dialing a related service code by the user sending, by an Internet Protocol Multimedia Subsystem (IMS), a notify message to activate or deactivate the hotline service of a terminal. However, the former two methods require logging on a corresponding medium and the users need to be familiar with the medium, so the operability is poor for general users. The latter method requires the user to register in advance, and after the user registers successfully, the activating or deactivating of the hotline service may be realized in cooperation with an IMS server, therefore, if the user fails to register, the service cannot be realized. To sum up, the manners of activating or deactivating services in the related communication technology lack enough flexibility and usability for general users.

Aiming at the problems in the related communication technology that the manner of activating or deactivating services is complicated and flexibility is low, an effective solution has not been presented at present.

### Summary

Some embodiments of the present disclosure provide a service processing method and device, and a home gateway, for at least solving the problems in the related communication technology that the manner of activating or deactivating services is complicated and flexibility is low.

According to an embodiment of the present disclosure, a service processing method is provided, which may include the following acts. A dialing message sent by a terminal is received. It is judged whether the dialing message is a message for processing a predetermined service. When a judgment result is that the dialing message is the message for processing the predetermined service, the predetermined service is processed.

In an exemplary embodiment, the act that it is judged whether the dialing message is the message for processing the predetermined service may include the following acts. It is judged whether dialing information carried in the dialing message matches information in an information list that is preloaded for processing the predetermined service. When a judgment result is that the dialing information carried in the dialing message matches the information in the information list that is preloaded for processing the predetermined service, it may be determined that the dialing message is the message for processing the predetermined service.

In an exemplary embodiment, the act that the predetermined service is processed may include at least one of the following acts. The predetermined service is activated for the terminal. The predetermined service is deactivated for the terminal.

In an exemplary embodiment, the dialing information may include the followings. When processing the predetermined service includes activating the predetermined service for the terminal, the dialing information may include an activation code and a predetermined phone number. When processing the predetermined service includes deactivating the predetermined service for the terminal, the dialing information may include a deactivation code.

In an exemplary embodiment, the predetermined service may be a hotline service.

According to another embodiment of the present disclosure, a service processing device is provided, which may include a receiving module, a judging module and a processing module. The receiving module is arranged to receive the dialing message sent by the terminal. The judging module is arranged to judge whether the dialing message is the message for processing the predetermined service. The processing module is arranged to, when a judgment result is that the dialing message is the message for processing the predetermined service, process the predetermined service.

In an exemplary embodiment, the judging module may include a judging unit and a determining unit. The judging unit is arranged to judge whether the dialing information carried in the dialing message matches the information in the information list that is preloaded for processing the predetermined service. The determining unit is arranged to, when a judgment result of the judging unit is that the dialing information carried in the dialing message matches the information in the information list that is preloaded for processing the predetermined service, determine that the dialing message is the message for processing the predetermined service.

In an exemplary embodiment, the processing module may include at least one of an activating unit or a deactivating unit. The activating unit is arranged to activate the predetermined service for the terminal. The deactivating unit is arranged to deactivate the predetermined service for the terminal.

In an exemplary embodiment, the dialing information may include the followings. When processing the predetermined service includes activating the predetermined service for the terminal, the dialing information may include the activation code and the predetermined phone number. When processing the predetermined service includes deactivating the predetermined service for the terminal, the dialing information may include the deactivation code.

In an exemplary embodiment, the predetermined service may be a hotline service.

According to another embodiment of the present disclosure, a home gateway is provided, which may include the above device.

According to the embodiments of the present disclosure, the dialing message sent by the terminal is received. It is judged whether the dialing message is the message for processing the predetermined service. When a judgment result is that the dialing message is the message for processing the predetermined service, the predetermined service is processed. In such a manner, the problems in the related communication technology that the manner of activating or deactivating services is complicated and flexibility is low are solved, thereby achieving the effects of reducing the complexity of the manner of activating or deactivating services and improving flexibility.

### Brief Description of the Drawings

The accompanying drawings described here are used for providing a deeper understanding of the present disclosure, and constitute a part of the application; schematic embodiments of the present disclosure and description thereof are used for illustrating the present disclosure and not intended to form a limit to the present disclosure. In the accompanying drawings:
Fig. 1 is a flowchart of a service processing method according to an embodiment of the present disclosure;
Fig. 2 is a structure diagram of a service processing device according to an embodiment of the present disclosure;
Fig. 3 is a structure diagram of a judging module 24 in a service processing device according to an embodiment of the present disclosure;
Fig. 4 is a structure diagram of a processing module 26 in a service processing device according to an embodiment of the present disclosure;
Fig. 5 is a structure diagram of a home gateway according to an embodiment of the present disclosure;
Fig. 6 is a flowchart of a method for realizing a voice hotline service according to an embodiment of the present disclosure;
Fig. 7 is a schematic diagram of interaction between a terminal and a home gateway according to an embodiment of the present disclosure;
Fig. 8 is a flowchart of a method for a home gateway to activate a hotline service according to an embodiment of the present disclosure;
Fig. 9 is a flowchart that a terminal realizes a hotline service according to an embodiment of the present disclosure; and
Fig. 10 is a flowchart of a method for a home gateway to deactivate a hotline service according to an embodiment of the present disclosure.

### Detailed Description of the Embodiments

The present disclosure is elaborated below with reference to the accompanying drawings and embodiments. Note that, the embodiments of the present disclosure and the characteristics in the embodiments may be combined under the condition of no conflicts.

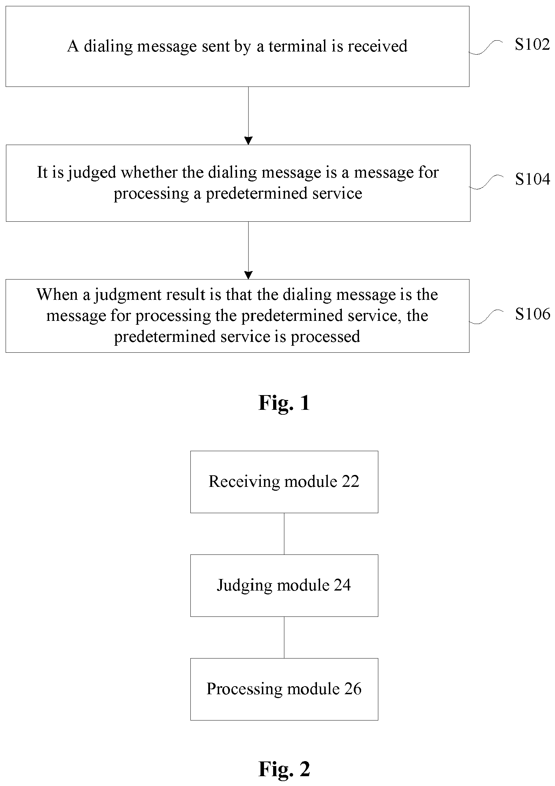

In the present embodiment, a service processing method is provided. Fig. 1 is a flowchart of a service processing method according to an embodiment of the present disclosure. As shown in Fig. 1, the flow may include the following acts.

At act S102, a dialing message sent by a terminal is received.

At act S104, it is judged whether the dialing message is a message for processing a predetermined service.

At act S106, when a judgment result is that the dialing message is the message for processing the predetermined service, the predetermined service is processed.

By means of the above acts, it can be directly judged whether to process the predetermined service according to the dialing message of the terminal. The processing of activating or deactivating services can be realized without need of considering a registration state of a terminal user and interacting with other network elements. The problems in the related communication technology that the manner of activating or deactivating services is complicated and flexibility is low are solved, thereby achieving the effects of reducing the complexity of the manner of activating or deactivating services and improving flexibility.

Various judging methods may be adopted for judging whether the dialing message is the message for processing the predetermined service. In an exemplary embodiment, when it is judged whether the dialing message is the message for processing the predetermined service, the following method may be adopted. It is judged whether dialing information carried in the dialing message matches information in an information list that is preloaded for processing the predetermined service. When a judgment result is that the dialing information carried in the dialing message matches the information in the information list that is preloaded for processing the predetermined service, it may be determined that the dialing message is the message for processing the predetermined service. That is, the dialing information carried in the dialing message sent by the terminal is matched with the information in the information list. When they are matched successfully, the predetermined service can be activated or deactivated for the terminal user, so that the flow of activating or deactivating services is simplified, and the general users can also easily activate or deactivate the predetermined service.

The act that the predetermined service is processed may include at least one of the following acts. The predetermined service is activated for the terminal. The predetermined service is deactivated for the terminal.

The dialing information carried in the dialing message sent by the terminal may include one of the following information. When processing the predetermined service includes activating the predetermined service for the terminal, the dialing information may include an activation code and a predetermined phone number. When processing the predetermined service includes deactivating the predetermined service for the terminal, the dialing information may include a deactivation code. When the dialing information is the activation code and the predetermined phone number, the related service may be activated for the predetermined phone number. The manner of deactivating the predetermined service may be simpler than the manner of activating the predetermined service. For example, the service may be deactivated by only inputting the activation code without inputting the predetermined phone number.

There may be multiple types of predetermined services. In an exemplary embodiment, the predetermined service may be, e.g., a hotline service.

In the present embodiment, a service processing device is also provided. The service processing device is arranged to implement the above embodiments and exemplary embodiments, which will not be elaborated herein. The term "module" used below can realize a combination of software and/or hardware with an intended function. Although the service processing device described in the following embodiment may be realized through software better, the realization through hardware or a combination of software and hardware is possible and conceived.

Fig. 2 is a structure diagram of a service processing device according to an embodiment of the present disclosure. As shown in Fig. 2, the service processing device may include: a receiving module 22, a judging module 24 and a processing module 26. The service processing device is elaborated below.

The receiving module 22 is arranged to receive the dialing message sent by the terminal. The judging module 24 is coupled to the receiving module 22 and arranged to judge whether the dialing message is the message for processing the predetermined service. The processing module 26 is coupled to the judging module 24 and arranged to, when a judgment result is that the dialing message is the message for processing the predetermined service, process the predetermined service.

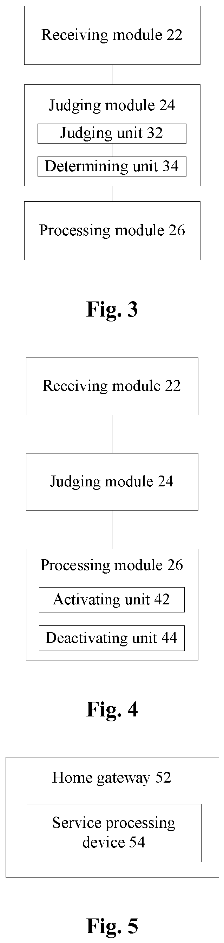

Fig. 3 is a structure diagram of a judging module 24 in a service processing device according to an embodiment of the present disclosure. As shown in Fig. 3, the judging module 24 may include: a judging unit 32 and a determining unit 24; the judging module 24 is elaborated below.

The judging unit 32 is arranged to judge whether the dialing information carried in the dialing message matches the information in the information list that is preloaded for processing the predetermined service. The determining unit 34 is coupled to the judging unit 32 and arranged to, when the judgment result of the judging unit 32 is that the dialing information carried in the dialing message matches the information in the information list that is preloaded for processing the predetermined service, determine that the dialing message is the message for processing the predetermined service.

Fig. 4 is a structure diagram of a processing module 26 in a service processing device according to an embodiment of the present disclosure. As shown in Fig. 4, the processing module 26 may include an activating unit 42 and/or a deactivating unit 44; the processing module is elaborated below.

The activating unit 42 is arranged to activate the predetermined service for the terminal. The deactivating unit 44 is arranged to deactivate the predetermined service for the terminal.

The dialing information may include any one of the following information. When processing the predetermined service includes activating the predetermined service for the terminal, the dialing information may include an activation code and a predetermined phone number. When processing the predetermined service includes deactivating the predetermined service for the terminal, the dialing information may include a deactivation code.

There may be multiple types of predetermined services. In an exemplary embodiment, the predetermined service may be a hotline service.

Fig. 5 is a structure diagram of a home gateway according to an embodiment of the present disclosure. As shown in Fig. 5, the home gateway 52 may include the service processing device 54.

The present disclosure is elaborated below by taking that the predetermined service is a hotline service for example.

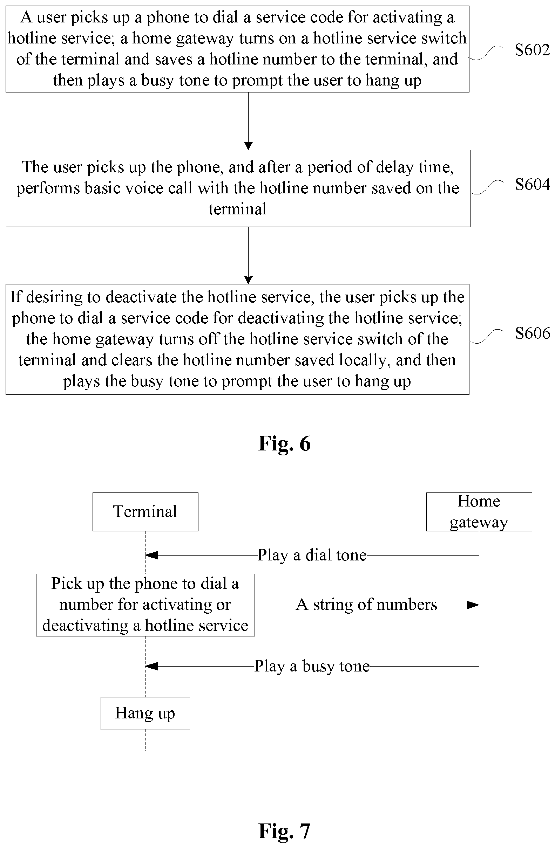

Fig. 6 is a flowchart of a method for realizing a voice hotline service according to an embodiment of the present disclosure. As shown in Fig. 6, the service processing method may include the following three acts.

At act S602, a user picks up a phone to dial a service code for activating a hotline service. A home gateway turns on a hotline service switch of the terminal and saves a hotline number to the terminal, and then plays a busy tone to prompt the user to hang up.

At act S604, the user picks up the phone, and after a period of delay time, performs basic voice call with the hotline number saved on the terminal.

At act S606, if desiring to deactivate the hotline service, the user picks up the phone to dial a service code for deactivating the hotline service. The home gateway turns off the hotline service switch of the terminal and clears the hotline number saved locally, and then plays a busy tone to prompt the user to hang up.

The operations of activating and deactivating the hotline service are respectively elaborated below.

Fig. 7 is a schematic diagram of interaction between a terminal and a home gateway according to an embodiment of the present disclosure. As shown in Fig. 7, after the terminal user picks up the phone, the home gateway plays a dial tone to the terminal user. After hearing the dial tone, the terminal user dials a service code for activating or deactivating a hotline service, and reports a number string to the home gateway for analysis. After activating or deactivating the hotline service, the home gateway plays a busy tone to the terminal user. After hearing the busy tone, the terminal user may choose to hang up.

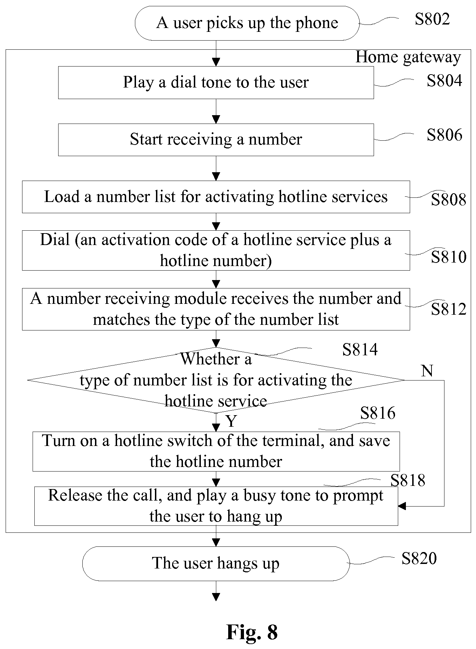

Fig. 8 is a flowchart of a method for a home gateway to activate a hotline service according to an embodiment of the present disclosure. As shown in Fig. 8, the flow may include the following acts.

At act S802, a terminal user picks up a phone.

At act S804, a home gateway plays a dial tone to the terminal user.

At act S806, the home gateway starts receiving a number.

At act S808, the home gateway loads a number list for activating hotline services, and the content of the number list may be configured.

At act S810, the terminal user dials a string of numbers, and the string of numbers may include an activation code of the hotline service and a hotline number.

At act S812, after receiving the number, a number receiving module in the home gateway matches a type of the number list.

At act S814, the home gateway judges whether the type of the number list is the number list for activating the hotline service. When the judgment result is that the type of the number list is the number list for activating the hotline service, act S816 is executed; or else, act S818 is executed.

At act S816, the home gateway determines that the type of the number list is the number list for activating the hotline service, turns on a hotline switch of the terminal, and saves the hotline number on the terminal.

At act S818, the home gateway releases this call, and plays a busy tone to the terminal user to prompt the user to hang up.

At act S820, the terminal user may choose to hang up.

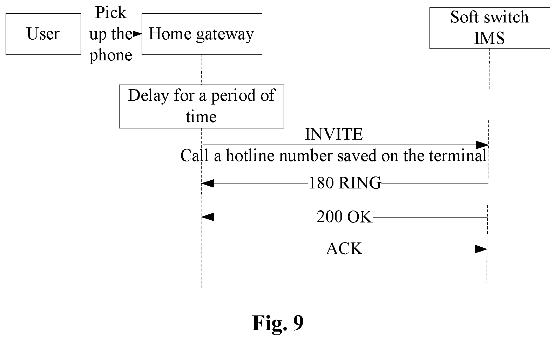

Fig. 9 is a flowchart that a terminal realizes a hotline service according to an embodiment of the present disclosure. As shown in Fig. 9, after the terminal user picks up the phone and holds for a period of delay time (for example, the delay time may be customized), an invite message for calling the hotline number may be sent to perform basic call with the hotline number.

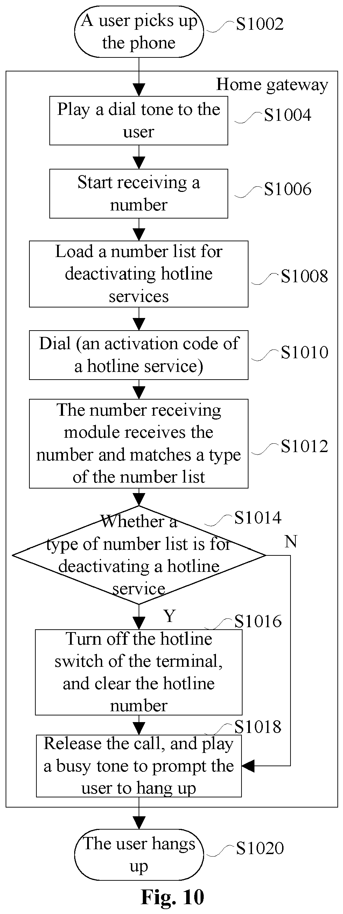

Fig. 10 is a flowchart of a method for a home gateway to deactivate a hotline service according to an embodiment of the present disclosure. As shown in Fig. 10, the flow may include the following acts.

At act S1002, a terminal user picks up a phone.

At act S1004, a home gateway plays a dial tone.

At act S1006, the home gateway starts receiving a number.

At act S1008, the home gateway loads a number list for deactivating hotline services, and the content of the number list may be configured.

At act S1010, the terminal user dials a number, and the number dialed may include a deactivation code of the hotline service only.

At act S1012, after receiving the number, the number receiving module matches a type of the number list.

At act S1014, the home gateway judges whether the type of the number list is the number list for deactivating the hotline service. When the judgment result is that the type of the number list is the number list for deactivating the hotline service, act S1016 is executed; or else, act S1018 is executed.

At act S1016, the home gateway determines that the type of the number list is the number list for deactivating the hotline service, deactivates the hotline service of the terminal and clears the hotline number saved on the terminal.

At act S1018, the home gateway releases this call, and plays a busy tone to the terminal user to prompt the user to hang up.

At act S1020, the terminal user may choose to hang up.

It may be known from the above embodiments that it is possible to not depend on the registration state of the terminal user in the operations of activating or deactivating the hotline service, that is to way, the hotline service can still be realized even the user fails to register. By means of the service processing method in the embodiments, when needing to use the hotline service, the user may use the hotline service in the next call by only picking up the phone to dial a string of numbers. If the user no longer wants to use the hotline service, he/she can also deactivate the hotline service by picking up the phone to dial a string of numbers. The user may use the hotline service when the hotline service has been activated, and may also pick up the phone to dial a number to perform a normal basic call when the hotline service has not been activated. With the manner, even the user fails to register, he/she can still perform operations of activating and deactivating the hotline service, so it is more flexible and easier for the general users to activate the hotline service, and it is more convenient for the users to use the hotline service of the terminal.

Obviously, those skilled in the art should appreciate that the above modules and acts of the present disclosure may be implemented by a general-purpose computing device, and they may be centralized in a single computing device or distributed on a network composed of multiple computing devices. In an exemplary embodiment, they may be implemented by a program code which is capable of being executed by the computing device, so that they may be stored in a storage device and executed by the computing device; and in some situations, the presented or described acts may be executed in an order different from that described here; or they are made into integrated circuit modules, respectively; or multiple modules and acts of them are made into a single integrated circuit module to realize. In this way, the present disclosure is not limited to any particular combination of hardware and software.

The above is only the exemplary embodiment of the present disclosure and not intended to limit the present disclosure; for those skilled in the art, the present disclosure may have various modifications and changes. Any modifications, equivalent replacements, improvements and the like within the principle of the present disclosure shall fall within the scope of protection defined by the appended claims of the present disclosure.

### Industrial Applicability

As mentioned above, a service processing method and device, and a home gateway provided in the embodiments of the present disclosure have the following beneficial effects. The problems in the related communication technology that the manner of activating or deactivating services is complicated and flexibility is low are solved, thereby achieving the effects of reducing the complexity of the manner of activating or deactivating services and improving flexibility.

## Claims

1. A service processing method, comprising:
receiving a dialing message sent by a terminal;
judging whether the dialing message is a message for processing a predetermined service; and
when a judgment result is that the dialing message is the message for processing the predetermined service, processing the predetermined service.

2. The service processing method as claimed in claim 1, wherein judging whether the dialing message is the message for processing the predetermined service comprises:
judging whether dialing information carried in the dialing message matches information in an information list that is preloaded for processing the predetermined service;
when a judgment result is that the dialing information carried in the dialing message matches the information in the information list that is preloaded for processing the predetermined service, determining that the dialing message is the message for processing the predetermined service.

3. The service processing method as claimed in claim 1, wherein processing the predetermined service comprises at least one of:
activating the predetermined service for the terminal; or
deactivating the predetermined service for the terminal.

4. The service processing method as claimed in claim 3, wherein
when processing the predetermined service comprises activating the predetermined service for the terminal, the dialing information comprises an activation code and a predetermined phone number;
when processing the predetermined service comprises deactivating the predetermined service for the terminal, the dialing information comprises a deactivation code.

5. The service processing method as claimed in any one of claims 1 to 4, wherein the predetermined service is a hotline service.

6. A service processing device, comprising:
a receiving module, which is arranged to receive a dialing message sent by a terminal;
a judging module, which is arranged to judge whether the dialing message is a message for processing a predetermined service; and
a processing module, which is arranged to, when a judgment result is that the dialing message is the message for processing the predetermined service, process the predetermined service.

7. The service processing device as claimed in claim 6, wherein the judging module comprises:
a judging unit, which is arranged to judge whether dialing information carried in the dialing message matches information in an information list that is preloaded for processing the predetermined service; and
a determining unit, which is arranged to, when a judgment result of the judging unit is that the dialing information carried in the dialing message matches the information in the information list that is preloaded for processing the predetermined service, determine that the dialing message is the message for processing the predetermined service.

8. The service processing device as claimed in claim 7, wherein the processing module comprises at least one of:
an activating unit, which is arranged to activate the predetermined service for the terminal; or
a deactivating unit, which is arranged to deactivate the predetermined service for the terminal.

9. The service processing device as claimed in claim 8, wherein
when processing the predetermined service comprises activating the predetermined service for the terminal, the dialing information comprises an activation code and a predetermined phone number;
when processing the predetermined service comprises deactivating the predetermined service for the terminal, the dialing information comprises a deactivation code.

10. The service processing device as claimed in any one of claims 6 to 9, wherein the predetermined service is a hotline service.

11. A home gateway, comprising the service processing device as claimed in any one of claims 6 to 10.
